# EUROPEAN PATENT APPLICATION

(11) **EP 2 503 501 A1**
(43) Date of publication of application: **26.09.2012**
(21) Application number: 09850519.1
(22) Date of filing: 23.10.2009
(51) Int. Cl.: G06Q 40/00

(54) **SYSTEM AND METHOD FOR JOINTLY CANCELLING DEBTS BETWEEN SEVERAL ENTITIES**

(71) Applicant: Excancel Euro S.L., 28001 Madrid (ES); Brito García, Gabino, 28001 Madrid (ES)
(72) Inventor: BRITO GARCÍA, Gabino, 28001 Madrid (ES)
(74) Representative: Falcon Morales, Alejandro
(86) International application number: PCT/ES2009/000510
(87) International publication number: WO 2011/048228

(57) **Abstract**

Procedure for the settlement of debts between two or more users registered in a server through an open network, which encompasses three phases:
• Validation of the user. The server sends an e-mail to the user, who confirms the registration from his/her account.
• Validation of debts by the user, who enters the personal details and identification numbers of other debtors or creditors together with the amount requested on the website of the server. Subsequently, the server sends the debtor the request and the debtor confirms the debt and enters an accepted amount from a personal computer. Finally, the server stores the data of the debt with the lower of the amounts requested or accepted.

Transactions of debts, whose calculation is based on the creation of PERT graphs with a number of users and debts. The server stores the cancelled debts and creates debt cancellation certification documents.

## Description

### Technology Sector

This invention falls within the sector of technology related to games as well as, and in particular, the processing of data within the sphere of calculation and computation.

### State of the Art

At present, the state of the art only includes systems to cancel debts between banking entities based on the transactions which the clients of each entity make with the other entities with which a banking entity wishes to clear its debts. These are closed systems, only for banking entities, based on the Bank Clearing House. Similar procedures exist in other countries and they are also carried out at an international level.

On the other hand, different methods are known in the state of the art in which internet users can access virtual environments in a secure manner through key words and verifications of information such as those which exist on the INTERNET pages of banks or the access to company INTRANETS from public networks.

In addition, within the state of the art, patent document US 2005/0289044 is known, which describes a method and system for the protection and cancellation of debts based on offering a lender a product associated with a loan, for which a periodic payment must be made.

However, within the state of the art, no procedure or system is known which serves to settle debts between private individuals based on technical elements which offer users security. On the other hand, the use of payment procedures and systems based solely on physical and electronic documents are known in the state of the art, such as "confirming" or "factoring", though these do not always include the wishes of the parties. Unlike these systems and procedures, this invention is based on a debt cancellation procedure based obligatorily on the wishes of both parties to proceed with that cancellation, for which electronic means are used, that being the object of this invention.

### Explanation of the invention

This invention aims to provide a system and a procedure based on computer tools for the settlement of debts between private individuals and/or companies who, in a general manner, are called users. For this, the object of this invention is to create a system which helps companies and individuals to settle their due debts, both to pay and to collect, without having to pay any money. Henceforth, the concept of 'debt' refers to debts which are already due, i.e. it does not refer to debts which become due at some time in the future.

The procedure consists of a computer system for the transmission of information which includes a device to authenticate the information. For this, a server will house the programs which permit the management of debts as well as a web page on which the companies will enter their commercial debts. The system will aim to seek combinations between users' commercial debts so that the payment of the debt is effected with the collection of another. Any debt which is accepted by both parties can enter the system.

The server will handle the information sent by the users and will then carry out the procedure of the joint cancellation of the debts of several entities based on the following phases:
- Validation of the user. For this, the user accesses a web page located on a server from a personal computer by means of a validation via e-mail. In this first phase, the user sends an e-mail to the server which houses the settlement system in which the user activation is confirmed.
- Validation of the debts by the user.
- Transactions of debts between those registered on the Web, which is based on the creation of directed PERT graphs with a number "n" of users and a number "D" of debts, with the condition that all the "n" users collect and pay the same and the system updates the data of the debts of all the users, deducting the amounts cancelled. The carrying out of these actions based on directed PERT graphs has been chosen due to their single-direction development. In other words, in PERT graphs the execution of an action which emerges from a phase can be begun only if all the activities which precede it, i.e. which end in that phase, have been completed.

### Brief description of the drawings

Figure 1 shows the general structure of the procedure.
Figure 2 is a diagram of the user validation.
Figure 3 is a diagram of the validation of debts.
Figure 4 is a diagram of the calculation of transactions.

### Explanation of how the procedure works

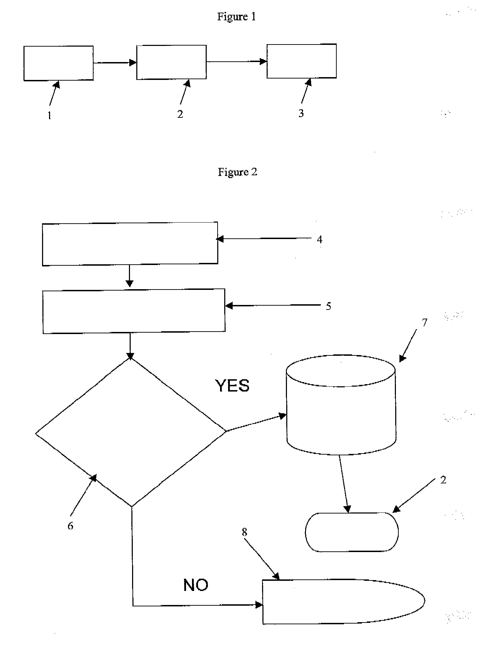

Once the user has registered on the website, the procedure for the settlement of debts between 2 or more users through an open network, in particular the INTERNET, encompasses the following three main phases:
- Validation of the user (1). As is shown in figure 2, the user accesses a web page located on a server from a personal computer by means of a validation via e-mail. From here, the steps that comprise this first phase are:
   ○ Entry (4) by the user of their data through the website.
   ○ Sending (5) of an e-mail from the server to the user.
   ○ After the user has received the e-mail, the next phase consists of the confirmation (6) of registration as a user by means of an e-mail from the user's account to the server.
   ○ If the server accepts the registration sent by the user, the server stores (7) the user's details and moves on to the next phase of validation of debts (2). If the server does not accept the registration, it waits for (8) a new confirmation from the user.

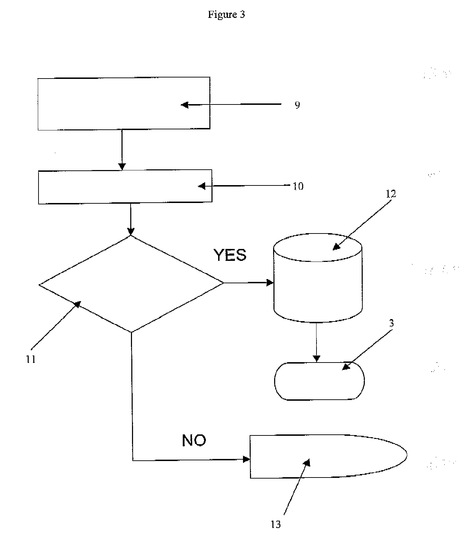

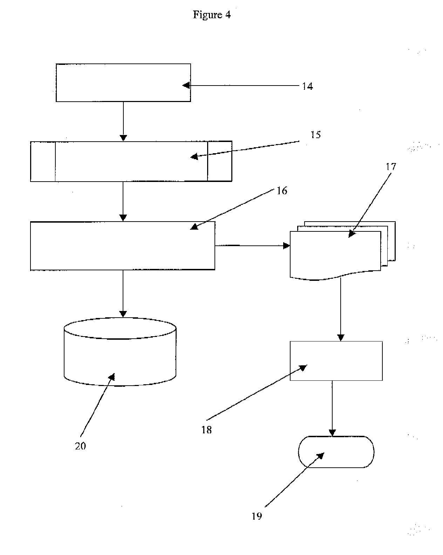

Therefore, in this first phase the user sends an e-mail to the server which houses the settlement system, in which the user confirms the registration.
- Validation of the debts by the user (2). Figure 3 explains this phase based on the following steps:
   - Entry (9) by the user of the personal details, both their own and those of the debtors or creditors, on the web page of the system which houses the server.
   - Receipt (10) by the debtor of the debt collection request through the web page set up by the server.
   - Confirmation (11) of the debt by the debtor. For this, the debtor enters an accepted amount from their personal computer, and the server houses the data of the debt with the lower of the amounts requested or accepted.
   - If the confirmation phase (11) is positive (YES), the next phase consists of the registration (12) by the server of the data of the debt with the lower of the amounts requested or accepted and it then passes into the transaction of debts phase (3).
   - If the confirmation phase (11) is negative (NO), the next phase consists of the server waiting (13) for the confirmation from the user, and it remains in that status until the start of a new cycle of cancellation of debts.
- Transactions (3) of debts between those registered on the website. In this case, as is outlined in figure 4, the phase of calculation of transactions is based on the creation of a directed PERT graph in which there is a number "N" of users and number "D" of debts with the condition that all the "N" users collect and pay the same and the system updates the data of the debts of all the users, deducting the amounts cancelled. Therefore, the combinations of cancellation of debt are based on the mathematical theory of graphs, which is applicable in the project evaluation and review technique (PERT), in which the projects are modelled using graph theory and optimising the times. For this, it is necessary to distinguish the following phases:
   - Creation (14) of PERT graphs with "n" users and a number "D" of debts.
   - Calculation (15) of combinations of cancellation of debt based on directed PERT graph.
   - Updating (16) of the data of the debts of all the "n" users based on the deduction of the amounts cancelled.
   - Creation (17) of debt cancellation documents through numbered electronic certificates.
   - Communication or sending (18) by the server of the electronic certificates of debt cancellation to the users so that they have a record of the amounts cancelled, and completion (19) of the debt clearing process.
   - Registration and storage (20) of the data of the cancelled debts. In other words, the server stores the data of the cancelled debts and creates debt cancellation certificate documents with the amount cancelled by the system via Web.

### Industrial application

This invention has an industrial application in the sector of technology related to information processing.

## Claims

1. System for clearing debts characterised because of being instantaneous, open to all entities, open to all debets and open to credits and because of being strong and open.

2. Procedure for clearing debts between two or more users through an open network, in particular the INTERNET, which encompasses the following three phases:
• validation of the user, in which the user accesses a web page located on a server from a personal computer by means of a validation via e-mail,
• validation of the debts by the user by entering their own personal data and those of the debtors or creditors on the web page of the system housed on the server,
• transactions of debts between those registered characterised because once the user has registered on the website, the validation phase encompasses the following stages:
• sending of an e-mail from the server to the user,
• sending of a confirmation e-mail by the user,
and because the debt validation phase is characterised because it encompasses the following phases:
• the user enter of the identification number of other debtors together with the amount requested by the user,
• the debtor receives the claim debt in the Web page of the server
• the debtor confirms the debt and enter the accepted amount from their personal computer, and the server stores the data related to
the debt with the lowest amount requested or accepted and because the phase of calculation of transactions debts is based on the creation of a directed PERT graph based on a number "N" of users and a number "D" of debts in which the system calculates the combinations of cancellation in such a way that all the companies collect and pay the same and the system updates the data of the debts of all the users, deducting the amounts cancelled, characterised because the server stores the data of cancelled debts and creates debt cancellation certification documents with the amount cancelled via Web.
